# EUROPEAN PATENT SPECIFICATION

(11) **EP 0 629 094 B1**
(45) Date of publication and mention of the grant of the patent: **17.05.2000**
(21) Application number: 94103354.0
(22) Date of filing: 05.03.1994
(51) Int. Cl.: H04Q 7/20, H04L 12/28, H04L 12/56

(54) **Improvements in or relating to cellular mobile radio systems**
Verbesserungen an zellular mobilen Funksystemen und diese betreffend
Améliorations relatives aux systèmes radio mobile cellulaires

(30) Priority: 10.06.1993 GB 9312006
(43) Date of publication of application: 14.12.1994
(73) Proprietor: ROKE MANOR RESEARCH LIMITED, Romsey, Hampshire, SO51 0ZN (GB)
(72) Inventor: DeVile, Jonathan Mark, Bournemouth, Dorset BH1 4DR (GB)
(74) Representative: Allen, Derek

(56) References cited:
- TENCON '92. 'TECHNOLOGY ENABLING TOMORROW'. 1992 IEEE REGION 10 INTERNATIONAL CONFERENCE. COMPUTERS, COMMUNICATIONS AND AUTOMATION TOWARDS THE 21ST CENTURY, vol.2, 11 November 1992, MELBOURNE AU pages 754 - 758 SUZUKI ET AL. 'A PERFORMANCE COMPARISON OF ALOHA-RESERVATION AND PRMA IN INTEGRATED VOICE AND DATA WIRELESS LOCAL AREA NETWORKS'
- IEEE INTERNATIONAL CONFERENCE ON COMMUNICATIONS '93, vol.2, 23 May 1993, GENEVA CH pages 1010 - 1016, XP000371230 SUZUKI ET AL. 'A CONTENTION-BASED RESERVATION PROTOCOL USING A TDD CHANNEL FOR WIRELESS LOCAL AREA NETWORKS: A PERFORMANCE ANALYSIS'
- IEEE INTERNATIONAL CONFERENCE ON COMMUNICATIONS '93, vol.1, 23 May 1993, GENEVA CH pages 172 - 176, XP000371088 WONG ET AL. 'Integrated data and speech transmission using packet reservation multiple access'

## Description

This invention relates to cellular mobile radio systems and more especially, although not exclusively, it relates to an improvement in or modification of a cellular mobile radio system arranged to operate in accordance with the packet reservation multiple access protocol which forms the subject of our co-pending GB Patent Application No 9219824.1. Although the invention is primarily intended for incorporation in digital cellular mobile radio communication systems, it may also find application in wireless local area networks.

According to our co-pending patent application, a cellular mobile radio system is provided which is arranged to operate in accordance with a packet reservation multiple access protocol, where at least one time slot in each frame is designated for the transmission of access contention data which includes a field reserved for data specifying a number of information slots required by a mobile unit, and which system includes a base station adapted for operation such that consequent upon receipt of data in the said reserved field, the base station is arranged to respond by allocating available slots to satisfy the requirement of the mobile unit. One important advantage of this system as will be appreciated by those skilled in the art, is that since only one access contention request is required, irrespective of the number of information slots required, the access contention time required to reserve capacity will be minimised or at least substantially reduced as compared with a system in which each individual slot must be contended for. Although the system is an improvement over hitherto known arrangements, in that the access contention time is reduced, in order to provide for transmission from the mobile in the slots allocated by the base station, a fair amount of signal processing power is required so that transmission bursts can be appropriately scheduled whereby the correct reserved slots allocated are used. Provided the scheduling operation is not required too frequently, the additional time taken by a low powered processor, which is correspondingly less expensive to fabricate, is acceptable. However, in the case of successive transmission bursts which require the scheduling of transmission burst to be re-configured repeatedly at short notice, higher power processing is required if unacceptable delays are to be avoided. As will be appreciated an increase in the access delay experienced by a mobile may for example result in audibly degraded speech quality.

The document entitled "A Performance Comparison of ALOHA-Reservation and PRMA in Integrated Voice and Data Wireless Local Area Networks" (1992 IEEE Region 10. International Conference. Computers, Communications and Automation Towards the 21^{st} Century, Vol. 2, 11 November, 1992, Melbourne AU, pages 754 - 758) discloses the allocation by a base station of a slot in a frame and classifies the allocated slot as a voice reserved slot. The base station continues to allocate the slot position in subsequent frames as long as voice packets are received.

The document entitled "A Contention-Based Reservation Protocol Using a TDD Channel for Wireless Local Area Networks: A Performance Analysis" (IEEE International Conference on Communications, Vol. 2, 23 May 1993, Geneva CH, pages 1010 - 1016) discloses a slot reservation scheme wherein a terminal transmits a reservation packet in a mini-slot in an uplink control sub-frame. A base station reserves data slots for the terminal on the basis of the requested number contained in the reservation packet. If further data slots are required, they must be separately reserved.

The document entitled "Integrated Data and Speech Transmission using Packet Reservation Multiple Access" (IEEE International Conference on Communications, Vol. 2, 23 May 1993, Geneva CH, pages 172 - 176) discloses a similar protocol to that disclosed above in the document entitled "A Performance Comparison of ALOHA-Reservation and PRMA in Integrated Voice and Data Wireless Local Area Networks".

It is an object therefore of the present invention to provide a cellular mobile radio system in which this degradation as aforesaid, is obviated.

According to the present invention we provide a radio system which is arranged to operate in accordance with a packet reservation multiple access protocol, wherein at least one time slot in each frame is designated for the transmission of access contention data, which includes a field reserved for data specifying the number of information slots required by a sub-unit, and which system includes a base station adapted for operation such that consequent upon receipt of data in the said reserved field, the base station is arranged to respond by allocating available slots to satisfy the requirement of the sub-unit, characterised in that the sub-unit includes a memory storage device used to store data appertaining to the information slots used in a previous transmissions and a slot transmission timer responsive to the store for resetting the transmitter so that the same time slots are re-selected for use in the next successive frame, consequent upon confirmation from the base station that the slots used in the previous period of transmission activity should be reused in the next successive frame.

The radio system may be a cellular mobile radio system wherein the sub-unit is a mobile unit.

Preferably the system additionally comprises activity detector means responsive to the commencement of activity requiring transmission from the mobile for activating the slot transmission timer so that slot re-selection is commenced as aforesaid.

Thus, it will be apparent when a new period of activity is started a mobile can prepare in advance for transmission in the time slots used previously, in advance of the actual assignment of those slots by the base station. Hence, it will only be in a case where different slots to those previously allocated are assigned that slot selection will need to be re-configured whereby an unavoidable delay may be incurred. Since statistically it can be shown that in the case of successive activity periods, the same slots tend to be re-used, delays will be avoided and the need for high power processing is obviated.

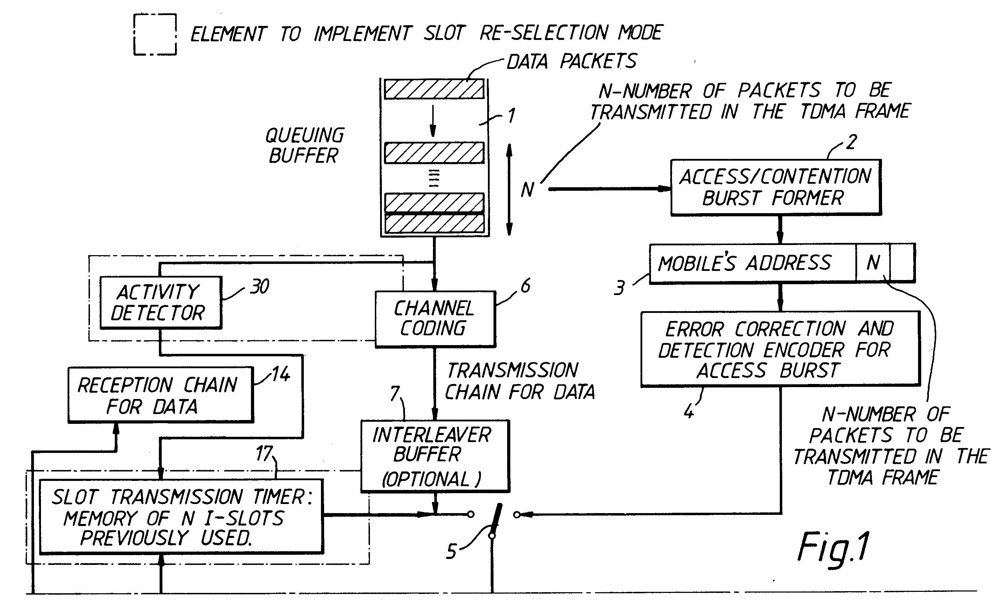

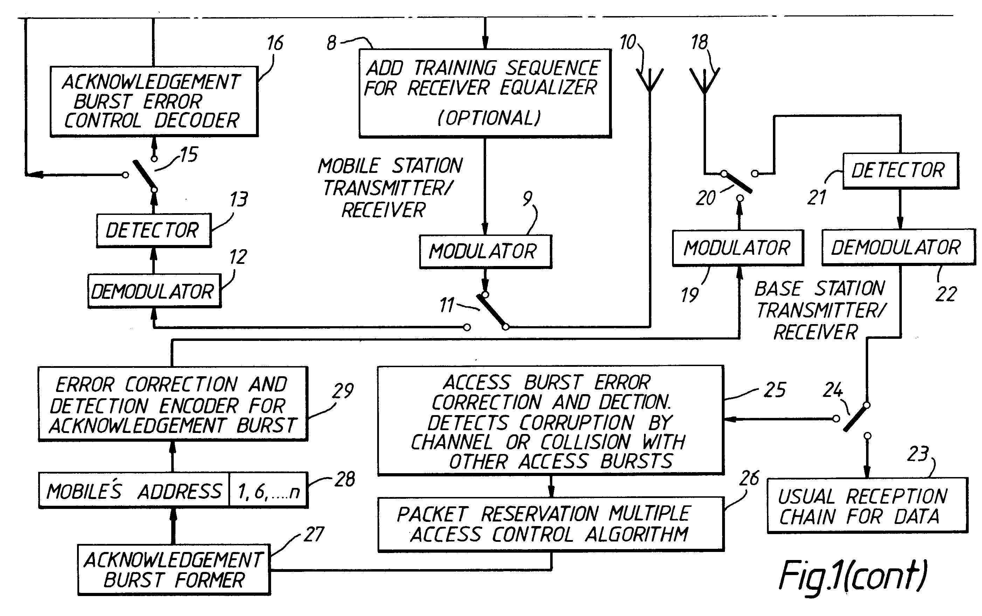

One embodiment of the invention will be described by way of example only with reference to the accompanying drawing, which corresponds substantially to Figure 5 of our co-pending patent application as referred to above with the exception that an activity detector has been included and a memory is associated with the slot transmission timer whereby implementation of the present invention is facilitated.

Referring now to the drawing, one arrangement of a mobile and base station for putting the invention into effect will now be described.

Referring firstly to the mobile station, the transmitter comprises a queuing buffer store 1 in which data for transmission is accumulated. The contents of the buffer is sensed by an access contention burst former 2 which determines the number of packets of data to be transmitted in a TDMA frame. Data appertaining to this number, together with the address of the mobile is fed via an address module 3 to an error correction and detection encoder 4 to a switch 5. The switch 5 is also fed from the queuing buffer 1 via a channel coding unit 6 and an interleaver buffer 7. The switch 5 is arranged to feed a training sequence adder 8 and a modulator 9 which in turn feeds an aerial 10 via a transmit/receive switch 11. It will be appreciated that the switch 5 is operated so that the interleaver buffer 7 is connected to the training sequence adder 8 for the transmission of data during an appropriate time slot or so that the error correction and detection decoder 4 is connected to the training sequence adder 8 for the transmission of access contention data appertaining to the number of packets of information to be transmitted. Received signals at the mobile station are fed via the switch 11 to a demodulator 12 which feeds the detector 13. The detector 13 either feeds a data reception chain 14 via a switch 15 or an acknowledgement burst error control decoder unit 16 and a slot transmission timer 17 which serve to identify available slots during which data packets in the queuing buffer 1 should be transmitted.

The base station comprises a transmit/receive aerial 18 fed for transmission purposes from a modulator 19. Signals received at the aerial 18 are fed via a detector 21 and a demodulator 22 to a data reception chain 23 via a switch 24. The switch 24 is arranged to feed the data reception chain 23 for data reception purposes or an access burst error correction and detection unit 25 when access-contention request data is received. The access burst error correction and detection unit 25 feeds a packet reservation multiple access control algorithm unit 26 which analyses each access contention request and serves to provide data appertaining to available time slots, which data is fed via an acknowledgement burst former 27 to an address unit 28 which serves to add the mobile's address to the data and an error correction and detection decoder 29 for the acknowledgement burst. The modulator 19 is fed conventionally with data during appropriate transmission slots and from the error correction and detection decoder 29 for the transmission of acknowledgement signals and data appertaining to slots in which a mobile should transmit. In order to implement the present invention so that slots can be reused, the slot transmission timer 17 is arranged to include a memory in which details appertaining to the I-slots used in the previous transmission are stored. The memory is arranged to be responsive to an activity detector 30 which is used to inform the slot transmission timer that activity has occurred on the channel in question. The slot transmission timer then sets up the transmitter/transport layer to transmit in the same time slots as were assigned during the previous period of activity. The access contention process then continues as usual. If a reply is received from the base station nominating use of the same information slots, the transport chain in the transmitter is already set up and so can commence the next transmission without further delay. If however, the I-slots are different to those which were previously selected, the transport chain is re-set for these new I-slots which are then entered into the memory which forms part of the slot transmission timer 17 for use, if appropriate, during the next activity period.

The process just before described whereby preparation for the same slots to be re-used is preferably performed also in the base station wherein the receiver chain is already prepared in advance and so expects to receive transmission bursts in a given time slot or slots.

Various modifications may be made to the arrangement just before described , and for example, although slot re-use is primarily intended for digital cellular mobile radio systems, it may also find application in wireless local area network systems.

## Claims

1. A radio system which is arranged to operate in accordance with a packet reservation multiple access protocol, wherein at least one time slot in each frame is designated for the transmission of access contention data, which includes a field reserved for data specifying the number of information slots required by a sub-unit (1-17, 30), and which system includes a base station (18-29) adapted for operation such that consequent upon receipt of data in the said reserved field, the base station (18-29) is arranged to respond by allocating available slots to satisfy the requirement of the sub-unit, characterised in that the sub-unit (1-17, 30) includes a memory storage device (17) used to store data appertaining to the information slots used in a previous transmission and a slot transmission timer (17) responsive to the store for resetting the transmitter so that the same time slots are re-selected for use in the present period of activity, consequent upon confirmation from the base station that the slots used in the previous transmission should be reused in the next successive frame.

2. A system as claimed in claim 1, and wherein the radio system is a cellular mobile radio system wherein the sub-unit (1-17, 30) is a mobile unit.

3. A system as claimed in claim 2, wherein the system additionally comprises activity detector means (30) responsive to the commencement of activity requiring transmission from the mobile for activating the slot transmission timer (17) so that slot re-selection is commenced.

4. A system as claimed in claim 2 or claim 3, wherein preparation for the same slots to be re-used is performed also in the base station (18-29) wherein the receiver chain (23) is prepared in advance and so expects to receive transmission bursts in slots used previously.

## Patentansprüche

1. Funksystem, das zum Betrieb nach einem Paketreservierungs-Mehrfachzugriffsprotokoll vorgesehen ist, wobei wenigstens ein Zeitschlitz in jedem Rahmen zum Senden von Zugriffskonkurrenzbetriebsdaten bestimmt ist, der ein Feld umfaßt, das für Daten reserviert ist, die die Anzahl von Informationsschlitzen angibt, die von einer Untereinheit (1-17,30) gefordert werden, und wobei das System eine Basisstation (18-29) umfaßt, die zu einem solchen Betrieb geeignet ist, daß nach dem Empfang von Daten in dem reservierten Feld die Basisstation (18-29) zum Reagieren durch Zuteilen verfügbarer Schlitze zur Erfüllung der Forderung der Untereinheit ausgebildet ist, dadurch gekennzeichnet, daß die Untereinheit (1-17, 30) eine Speichereinrichtung (17), die zum Speichern von Daten verwendet wird, die bei einem früheren Senden verwendet wurden, und einen Schlitzsendezeitgeber (17) umfaßt, der abhängig ist von dem Speicher, um den Sender zurückzustellt, so daß nach der Bestätigung von der Basisstation, daß die bei dem vorhergehenden Senden verwendeten Zeitschlitze im nächsten, nachfolgenden Rahmen wieder verwendet werden sollten, die gleichen Zeitschlitze wieder zur Verwendung bei der gegenwärtigen Aktivitätsperiode ausgewählt werden.

2. System nach Anspruch 1, bei welchem das Funksystem ein drahtloses Mobilfunksystem ist, bei dem die Untereinheit (1-17, 30) eine mobile Einheit ist.

3. System nach Anspruch 2, bei welchem das System zusätzlich eine Aktivitätsdetektoreinrichtung (30) aufweist, die abhängig vom Beginn der Aktivität ein Senden von der mobilen Einheit fordert, um den Schlitzsendezeitgeber (17) derart zu aktivieren, daß mit der Wiederauswahl von Schlitzen begonnen wird.

4. System nach Anspruch 2 oder Anspruch 3, bei welchem die Vorbereitung zum Wiederverwenden der gleichen Schlitze auch in der Basisstation (18-29) durchgeführt wird, wobei die Empfängerkette (23) vorher vorbereitet wird und so den Empfang von Sendesignalpaketen in vorher verwendeten Schlitzen erwartet.

## Revendications

1. Système radio qui est conçu pour fonctionner conformément à un protocole d'accès multiple par réservation de paquets, dans lequel au moins une tranche temporelle au sein de chaque trame est désignée pour la transmission de données de contention d'accès, laquelle contient un champ réservé à des données spécifiant le nombre de tranches d'informations exigées par une sous-unité (1-17, 30), et lequel système comporte une station de base (18-29) adaptée pour agir de sorte que, après la réception de données dans ledit champ réservé, la station de base (18-29) est conçue de manière à répondre en allouant des tranches disponibles afin de satisfaire aux exigences de la sous-unité, caractérisé en ce que la sous-unité (1-17, 30) comporte un dispositif de mémorisation (17) utilisé pour mémoriser des données relatives aux tranches d'informations utilisées au cours d'une transmission précédente et un temporisateur de transmission de tranches (17) sensible à la mémorisation pour réinitialiser l'émetteur de sorte que les mêmes tranches temporelles soient resélectionnées afin d'être utilisées au cours de la présente période d'activité, après confirmation par la station de base que les tranches utilisées au cours de la transmission précédente doivent être réutilisées dans la trame successive suivante.

2. Système selon la revendication 1, et dans lequel le système radio est un système radio mobile cellulaire dans lequel la sous-unité (1-17, 30) est une unité mobile.

3. Système selon la revendication 2, dans lequel le système comporte de plus des moyens de détection d'activité (30), sensibles au début d'une activité exigeant une transmission à partir du mobile, pour activer le temporisateur de transmission de tranches (17) de manière à débuter la resélection de tranches.

4. Système selon la revendication 2 ou 3, dans lequel la préparation des tranches à réutiliser est également effectuée dans la station de base (18-29), dans lequel la chaîne de réception (23) est préparée à l'avance et s'attend donc à recevoir des salves de transmission dans les tranches précédemment utilisées.
